# FASCICULE DE BREVET EUROPEEN

(11) **EP 4 063 794 B1**
(45) Date de publication et mention de la délivrance du brevet: **11.10.2023**
(21) Numéro de dépôt: 22163196.3
(22) Date de dépôt: 21.03.2022
(51) Int. Cl.: G01C 23/00, G05D 1/10, G01C 21/20, G05D 1/06, G08G 5/00, G08G 5/02

(54) **PROCEDE ET SYSTEME DE CALCUL DE TRAJECTOIRE POUR FAIRE ATTERRIR UN AERONEF**
VERFAHREN UND SYSTEM ZUR BERECHNUNG DER FLUGBAHN ZUR LANDESTEUERUNG EINES FLUGZEUGS
METHOD AND SYSTEM FOR CALCULATING TRAJECTORY FOR LANDING AN AIRCRAFT

(30) Priorité: 23.03.2021 FR 2102914
(43) Date de publication de la demande: 28.09.2022
(73) Titulaire: AIRBUS OPERATIONS, 31060 Toulouse Cedex 9 (FR)
(72) Inventeur: PASTRE, Thomas, 31060 TOULOUSE (FR); CONSIGLIERI PEDROSO MENDES DIAS, Miguel, 31060 TOULOUSE (FR)
(74) Mandataire: Cabinet Le Guen Maillet

(56) Documents cités:
- US-A1- 2017 132 942
- US-A1- 2020 273 350
- FALLAST ARNO ET AL: "Automated trajectory generation and airport selection for an emergency landing procedure of a CS23 aircraft", CEAS AERONAUTICAL JOURNAL, SPRINGER VIENNA, VIENNA, vol. 8, no. 3, 30 juin 2017 (2017-06-30), pages 481-492, XP036301425, ISSN: 1869-5582, DOI: 10.1007/S13272-017-0252-5 [extrait le 2017-06-30]

## Description

### DOMAINE TECHNIQUE

La présente invention concerne un système de calcul automatique en temps-réel d'une trajectoire à suivre pour faire atterrir un aéronef, depuis une position géographique et une altitude courantes en vol, sur une piste d'atterrissage géoréférencée.

### ETAT DE LA TECHNIQUE ANTERIEURE

Lorsqu'un aéronef est en vol, il peut être souhaitable de fournir une assistance automatique pour déterminer de manière automatique une trajectoire qui permette d'amener l'aéronef jusqu'à une piste d'atterrissage. Par exemple, cette assistance serait particulièrement utile dans le cas où l'aéronef dispose d'un unique pilote, et particulièrement avantageuse lorsque ce pilote est en incapacité de déterminer lui-même cette trajectoire. De nombreux obstacles sont à prendre en compte dans la détermination d'une trajectoire qui soit volable (« flyable » en anglais) : le relief du terrain, les obstacles météorologiques, les zones militaires dont le survol est interdit, l'état opérationnel de l'aéronef (dépressurisation cabine, moteur hors-service...). Une trajectoire volable est une trajectoire qui en tout point présente une marge de distance minimale (ou prédéterminée) par rapport à tout obstacle identifié (relief...) et que peut suivre l'aéronef compte tenu de son état de santé (dépressurisation éventuelle, perte d'un moteur...).

Dans l'état actuel de la technique, déterminer de manière automatique, en temps-réel, une telle trajectoire requiert de grandes ressources de traitement, et surtout un temps de calcul important. Il est alors souhaitable de pallier ces inconvénients de l'état de la technique.

Il est notamment souhaitable de fournir une solution permettant de déterminer une trajectoire sûre (« safe » en anglais) à suivre pour faire atterrir un aéronef actuellement en vol, depuis sa position géographique et son altitude courantes, sur une piste d'atterrissage géoréférencée. Il est plus particulièrement souhaitable de fournir une solution qui permette de déterminer cette trajectoire en un temps réduit. Il est aussi souhaitable de fournir une solution qui permette d'indiquer au pilote si une telle trajectoire existe. Il est aussi souhaitable de fournir une solution qui permette d'indiquer au pilote, parmi une liste de pistes d'atterrissage géoréférencées, pour quelles pistes d'atterrissage une telle trajectoire existe.

Fallast, A., Messnarz, B. "Automated trajectory génération and airport sélection for an emergency landing procedure of a CS23 aircraft". CEAS Aeronaut J 8, 481-492 (2017). https://doi.org/10.1007/ s 13272-017 -0252-5 décrit la génération automatique d'une trajectoire d'un aéronef pour réaliser un atterrissage d'urgence.

### EXPOSE DE L'INVENTION

Un objet de la présente invention est de proposer un procédé de génération de trajectoire tel que revendiqué dans la revendication 1.

L'invention concerne également un programme d'ordinateur comportant des instructions pour implémenter le procédé évoqué ci-dessus ainsi qu'un support de stockage d'informations stockant des instructions pour implémenter le procédé évoqué ci-dessus .

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement, en vue de côté, un aéronef équipé d'un système de génération automatique de trajectoire ;
[Fig. 2] illustre schématiquement le système de génération automatique de trajectoire ;
[Fig. 3] illustre schématiquement un exemple d'architecture matérielle du système de génération automatique de trajectoire ;
[Fig. 4] illustre schématiquement un algorithme de génération de trajectoire implémenté par le système de génération automatique de trajectoire ;
[Fig. 5] illustre schématiquement un algorithme d'obtention de procédure STARI implémenté par le système de génération automatique de trajectoire ;
[Fig. 6] illustre schématiquement un algorithme de génération de procédure STARI implémenté par le système de génération automatique de trajectoire ;
[Fig. 7] illustre schématiquement, en vue de côté, une trajectoire d'approche finale d'atterrissage ;
[Fig. 8] illustre schématiquement, en vue de dessus, une trajectoire latérale d'approche finale d'atterrissage ;
[Fig. 9A] illustre schématiquement, en vue de côté, une portion de trajectoire d'approche finale d'atterrissage ayant un angle de descente forcée avant alignement sur une piste d'atterrissage ;
[Fig. 9B] illustre schématiquement, en vue de dessus, une portion de trajectoire d'approche finale d'atterrissage ayant un angle latéral d'approche non nul avant alignement sur la piste d'atterrissage ;
[Fig. 10A] illustre schématiquement, en vue de dessus, un schéma de circuit d'attente centré à gauche ;
[Fig. 10B] illustre schématiquement, en vue de dessus, un schéma de circuit d'attente centré à droite ;
[Fig. 10C] illustre schématiquement, en vue de dessus, un schéma de circuit d'attente centré à gauche, dans un mode de réalisation particulier où ledit schéma de circuit d'attente dépend de l'altitude à laquelle il est appliqué ;
[Fig. 10D] illustre schématiquement, en vue de dessus, un schéma de circuit d'attente centré à droite, dans un mode de réalisation particulier où ledit schéma de circuit d'attente dépend de l'altitude à laquelle il est appliqué ;
[Fig. 10E] montre une réalisation du schéma de circuit d'attente avec centrage à gauche qui n'est pas volable au vu d'un relief de terrain aux abords de la piste d'atterrissage ;
[Fig. 10F] montre une réalisation du schéma de circuit d'attente avec centrage à gauche qui est volable au vu d'un relief de terrain aux abords de la piste d'atterrissage ;
[Fig. 11] illustre schématiquement un algorithme de génération de procédure STARI implémenté par le système de génération automatique de trajectoire, dans un mode de réalisation particulier ;
[Fig. 12A] illustre schématiquement, en vue de dessus, des extensions possibles de trajectoire en recherche arrière, selon une première configuration ;
[Fig. 12B] illustre schématiquement, en vue de dessus, des extensions possibles de trajectoire en recherche arrière, selon une deuxième configuration ;
[Fig. 12C] illustre schématiquement, en vue de dessus, des extensions possibles de trajectoire en recherche arrière, selon une troisième configuration ;
[Fig. 13] illustre schématiquement un algorithme de détermination de trajectoire latérale implémenté par le système de génération automatique de trajectoire ;
[Fig. 14A] illustre schématiquement un premier profil de trajectoire verticale ;
[Fig. 14B] illustre schématiquement un deuxième profil de trajectoire verticale ;
[Fig. 14C] illustre schématiquement un troisième profil de trajectoire verticale ;
[Fig. 14D] illustre schématiquement un quatrième profil de trajectoire verticale ;
[Fig. 15] illustre schématiquement un exemple de trajectoire latérale volable ;
[Fig. 16] illustre schématiquement un algorithme d'optimisation de profil de trajectoire verticale implémenté par le système de génération automatique de trajectoire ;
[Fig. 17] illustre schématiquement un profil d'élévation de terrain le long de la trajectoire latérale déterminée ;
[Fig. 18] illustre schématiquement un exemple de profil de trajectoire verticale optimisé ;
[Fig. 19] illustre schématiquement un autre exemple de profil de trajectoire verticale optimisé, lorsque le sommet de descente apparaît avant le sommet de montée ; et
[Fig. 20] illustre schématiquement un mode de réalisation particulier du système de génération automatique de trajectoire.

### EXPOSE DETAILLE DE MODES DE REALISATION

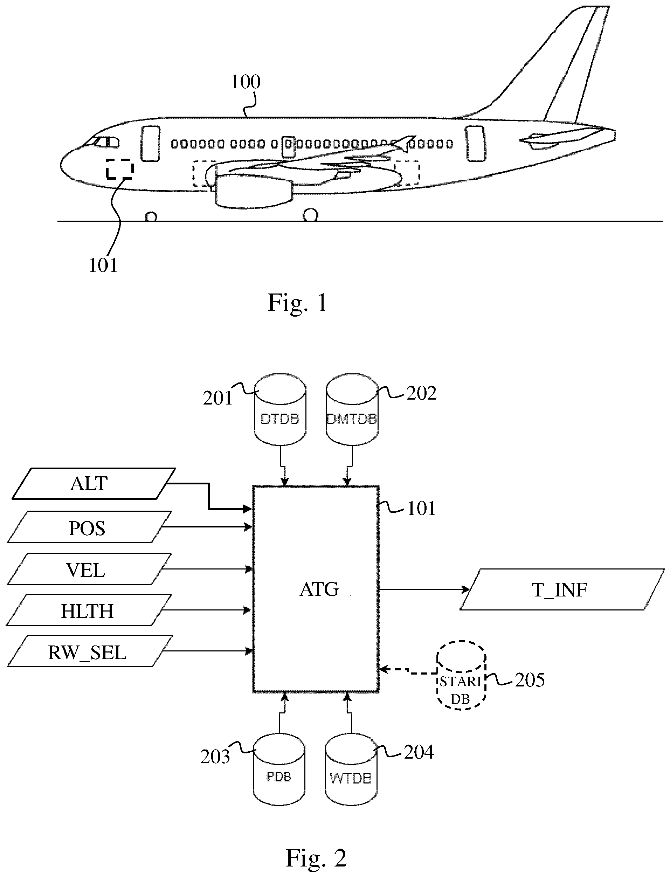

La Fig. 1 illustre schématiquement, en vue de côté, un aéronef 100 équipé d'un système de génération automatique de trajectoire ATG (« Automatic Trajectory Generator » en anglais) 101.

Le système ATG 101 est un équipement électronique embarqué. Par exemple, le système ATG 101 fait partie d'une circuiterie électronique de l'avionique de l'aéronef 100. Préférentiellement, le système ATG 101 est intégré à un calculateur de l'aéronef, par exemple le système de gestion de vol FMS (« Flight Management System » en anglais) de l'aéronef 100 ou un autre système de calcul de trajectoire distinct du système de gestion de vol FMS.

Le système ATG 101 est un système d'assistance au pilotage pour déterminer en temps-réel une trajectoire sûre (« safe » en anglais), volable, à suivre pour faire atterrir l'aéronef 100 lorsque celui-ci est en vol, depuis sa position géographique et son altitude courantes, sur une piste d'atterrissage géoréférencée.

Les termes « piste d'atterrissage » sont à entendre au sens large, c'est-à-dire que la piste d'atterrissage peut être une piste d'aéroport standard, mais peut aussi être une zone d'amerrissage ou une plateforme de porte-avions.

Le système ATG 101 est schématiquement illustré sur la Fig. 2. Le système ATG 101 est configuré pour prendre en entrée un ensemble d'informations fournies par l'avionique : l'altitude courante de l'aéronef 100 (notée ALT), la position géographique courante de l'aéronef 100 (notée POS), la vélocité ou vitesse courante de l'aéronef 100 (notée VEL), une information de santé de l'aéronef 100 (notée HLTH) et une information de piste d'atterrissage sélectionnée (notée RW_SEL). Le système ATG 101 est configuré pour fournir en sortie une information de trajectoire (notée T_INF).

L'information de santé HLTH est une information, tel qu'un ensemble d'indicateurs, qui représente un état opérationnel de l'aéronef 100. Notamment, l'information de santé HLTH indique si la cabine est en dépressurisation ou non, si tous les moteurs sont opérationnels ou non... L'information de santé HLTH indique ainsi si des contraintes de trajectoire sont à respecter, comme par exemple une altitude maximale ALTₘₐₓ de vol réduite en cas de dépressurisation de la cabine, ou des performances réduites en cas de défaut de fonctionnement d'un moteur.

Il est rappelé ici qu'une trajectoire volable est une trajectoire qui en tout point présente une marge de distance minimale (ou prédéterminée) par rapport à tout obstacle identifié (relief...) et que peut suivre l'aéronef 100 compte tenu de son état de santé (dépressurisation éventuelle, perte d'un moteur...) tel qu'indiqué par l'information de santé HLTH.

Pour déterminer l'information de trajectoire T_INF, le système ATG 101 dispose d'informations fournies par un ensemble de bases de données. Plus particulièrement : une base de données DTDB (pour « Digital Terrain DataBase » en anglais) 201, qui fournit des informations d'élévation de terrain ; une base de données DMTDB (pour « Digital Military Terrain DataBase » en anglais) 202, qui fournit des informations de géoréférencement de zones militaires dont le survol est interdit ; une base de données WTDB (pour « Weather Terrain DataBase » en anglais) 204, qui fournit des informations géoréférencées de zones à éviter à cause des conditions météo ; et une base de données PDB (pour « Performance DataBase » en anglais) 203, qui fournit des informations de performances de l'aéronef 100 en fonction de l'état opérationnel de l'aéronef 100.

Dans un mode de réalisation particulier, le système ATG 101 dispose en outre d'informations fournies par une base de données STARI DB (« Standard Terminal Arrival Route Incapacitation DataBase » en anglais) 205. La base de données STARI DB 205 fournit des procédures STARI préalablement établies pour une ou plusieurs pistes d'atterrissage géoréférencées, comme détaillé par la suite.

Une procédure STARI est une procédure qui fournit une trajectoire finale à l'approche de la piste d'atterrissage considérée, qui soit volable par l'aéronef 100 pour atterrir, quelles que soient les performances de l'aéronef 100, et telle que, à partir de son point d'entrée ou de tout point au-dessus, un circuit d'attente (« holding pattern » en anglais) volable de forme prédéfinie est volable pour réaliser une dissipation d'énergie si nécessaire. En ce sens, une procédure STARI est un type spécial, introduit ici, de procédure STAR (« Standard Terminal Arrival Route » en anglais) qui définit de manière standard une trajectoire à suivre à l'arrivée sur un aéroport par un aéronef évoluant selon des règles de vol aux instruments IFR (« Instrument Flight Rules » en anglais).

Les bases de données susmentionnées peuvent être totalement intégrées à un système informatique de l'aéronef 100. Avant le décollage, les bases de données sont mises à jour, par exemple grâce à une sacoche de vol électronique EFB (« Electronic Flight Bag » en anglais). Les bases de données peuvent être intégrées à un système informatique au sol, par exemple un centre informatique d'une compagnie aérienne pour lequel opère l'aéronef 100. La mise à jour des bases de données est alors réalisée grâce à des communications sol - air AGC (« Air - Ground Communications » en anglais). Ces deux approches peuvent être combinées, avec un pré-chargement des bases de données avant le décollage et des mises à jour en vol, par exemple pour prendre en compte des évolutions de données en temps-réel (conditions météo...).

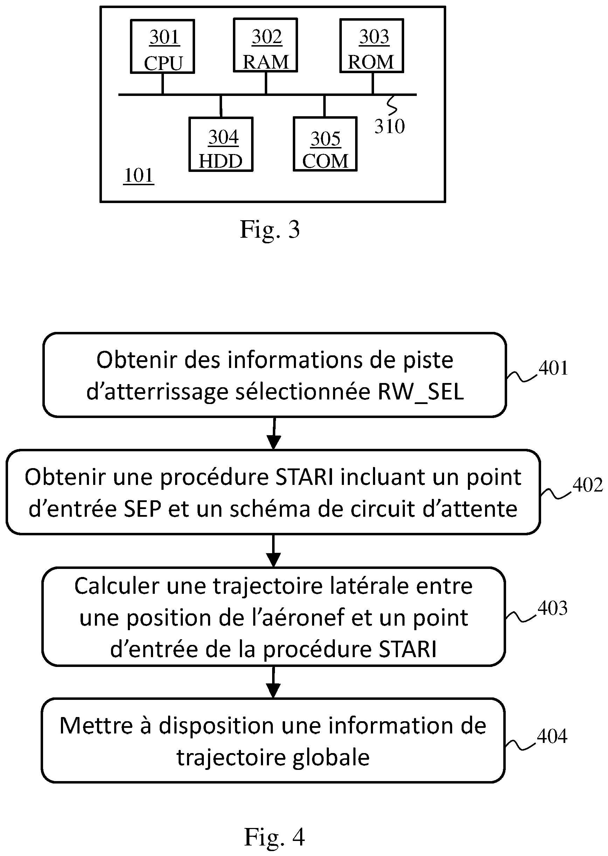

La Fig. 3 illustre schématiquement un exemple d'architecture matérielle du système ATG 101, qui comprend alors, reliés par un bus de communication 300 : un processeur ou CPU (« Central Processing Unit » en anglais) 301 ; une mémoire vive RAM (« Random Access Memory » en anglais) 302 ; une mémoire morte ROM (« Read Only Memory » en anglais) 303, par exemple une mémoire Flash ; un dispositif de stockage de données, tel qu'un disque dur HDD (« Hard Disk Drive » en anglais), ou un lecteur de support de stockage, tel qu'un lecteur de cartes SD (« Secure Digital » en anglais) 304 ; au moins une interface de communication 305 permettant au système ATG 101 d'interagir dans l'avionique de l'aéronef 100.

Le processeur 301 est capable d'exécuter des instructions chargées dans la RAM 302 à partir de la ROM 303, d'une mémoire externe (non représentée), d'un support de stockage, tel qu'une carte SD, ou d'un réseau de communication (non représenté). Lorsque le système ATG 101 est mis sous tension, le processeur 301 est capable de lire de la RAM 302 des instructions et de les exécuter. Ces instructions forment un programme d'ordinateur causant la mise en oeuvre, par le processeur 301, des comportements, étapes et algorithmes décrits ici.

Tout ou partie des comportements, étapes et algorithmes décrits ici peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant (« chip » en anglais) dédié ou un ensemble de composants (« chipset » en anglais) dédié, tel qu'un FPGA (« Field-Programmable Gate Array » en anglais) ou un ASIC (« Application-Specific Integrated Circuit » en anglais). D'une manière générale, le système ATG 101 comprend de la circuiterie électronique agencée et configurée pour implémenter les comportements, étapes et algorithmes décrits ici.

La Fig. 4 illustre schématiquement un algorithme de génération de trajectoire implémenté par le système ATG 101.

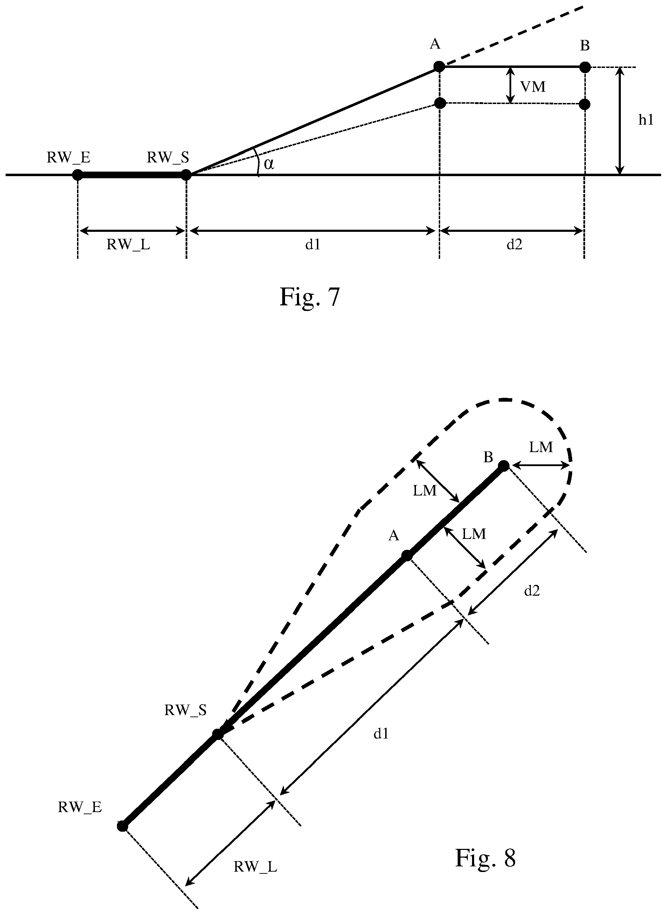

Dans une étape 401, le système ATG 101 obtient l'information de piste d'atterrissage sélectionnée RW_SEL. Par exemple, la piste d'atterrissage en question est sélectionnée par l'avionique parmi une liste prédéterminée de pistes d'atterrissage. L'information de piste d'atterrissage sélectionnée RW_SEL inclut un géoréférencement de la piste d'atterrissage en question, ainsi que des informations complémentaires comme détaillé ci-après en relation avec la Fig. 7.

Dans une étape 402, le système ATG 101 obtient une procédure STARI adaptée à la piste d'atterrissage sélectionnée. La procédure STARI définit un point d'entrée SEP (« STARI Entry Point » en anglais) de la procédure STARI, ainsi qu'un schéma de circuit d'attente applicable en toute sécurité par l'aéronef 100. Cet aspect est détaillé par la suite.

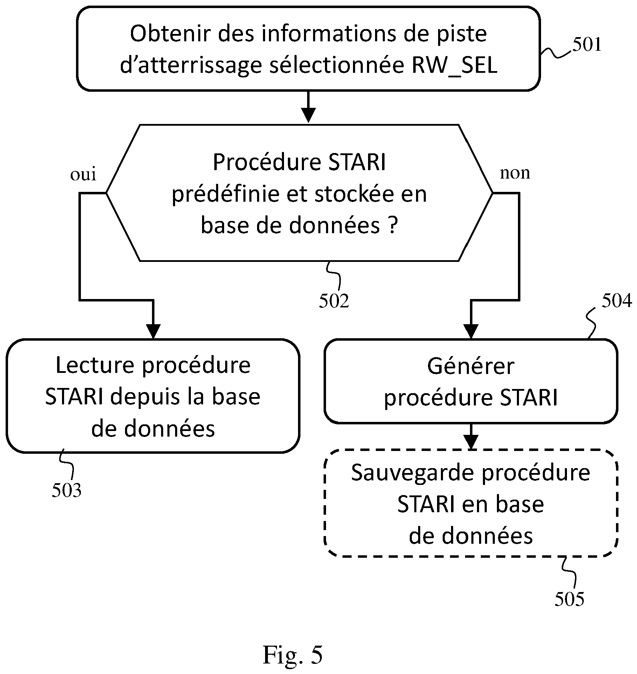

Dans un premier mode de réalisation, la procédure STARI est calculée en temps-réel par le système ATG 101. Dans un deuxième mode de réalisation, la procédure STARI est récupérée (« retrieved » en anglais) par le système ATG 101 auprès de la base de données STARI DB 205. Un mode de réalisation particulier est décrit ci-après en relation avec la Fig. 5.

Dans une étape 403, le système ATG 101 calcule une trajectoire latérale entre la position actuelle POS de l'aéronef 100 et le point d'entrée SEP (« STARI Entry Point » en anglais) de la procédure STARI obtenue à l'étape 402. Le calcul de la trajectoire évite le relief de terrain défini par les informations d'élévation de terrain de la base de données DTDB 201, ainsi que les zones militaires définies par la base de données DMTDB 202, et les obstacles météorologiques tels que définis par la base de données WTDB 204. En ce qui concerne les zones à éviter à cause des conditions météorologiques et les zones militaires, celles-ci peuvent être définies comme des informations d'élévation de terrain avec une borne inférieure et une borne supérieure. Par exemple, les zones militaires ont une borne inférieure nulle et une borne supérieure représentative d'une très haute altitude, voire d'une altitude infinie. Des nuages d'orage peuvent ainsi aussi être définis de sorte à permettre de passer en dessous. Le calcul de la trajectoire est en outre effectué en tenant compte des performances de l'aéronef 100 telles que fournies par la base de données PDB 203 (capacité de changement de cap...) et de la vélocité VEL.

Le calcul de trajectoire latérale s'effectue préférentiellement, comme détaillé ci-après, selon un profil de trajectoire verticale qui vise à faire transiter l'aéronef 100 à une altitude de croisière maximale ALTₘₐₓ. Le système ATG 101 définit l'altitude ALTₘₐₓ en fonction de l'information de santé HLTH.

Dans une étape 404, le système ATG 101 fournit une information de trajectoire globale T INF permettant de rejoindre la piste d'atterrissage sélectionnée. Pour ce faire, le système ATG 101 obtient la trajectoire globale en reliant la trajectoire latérale calculée à l'étape 403 et la procédure STARI obtenue à l'étape 402. Lorsque la trajectoire latérale calculée à l'étape 403 mène au-dessus du point d'entrée SEP de la procédure STARI, une ou plusieurs itérations du schéma de circuit d'attente sont insérées pour relier la trajectoire latérale calculée à l'étape 403 et la procédure STARI obtenue à l'étape 402, permettant ainsi à l'aéronef 100 de réduire son altitude en toute sécurité. La quantité d'itérations du schéma de circuit d'attente nécessaires dépend des performances de l'aéronef 100 et de la différence d'altitude à compenser.

Selon un mode de réalisation, l'information de trajectoire globale T INF est une représentation graphique de la trajectoire en question sur un écran du cockpit de l'aéronef 100. Selon un autre mode de réalisation, l'information de trajectoire globale T_INF est une description de la trajectoire en question interprétable par un autopilote de l'avionique de l'aéronef 100. Auquel cas, l'autopilote est programmé avec la trajectoire en question afin d'amener l'aéronef 100 sur la piste d'atterrissage. Selon un autre mode de réalisation, l'information de trajectoire globale T INF est une description de la trajectoire en question transmise sous forme de signaux à un service de contrôle de la circulation aérienne ATC (« Air Traffic Control » en anglais).

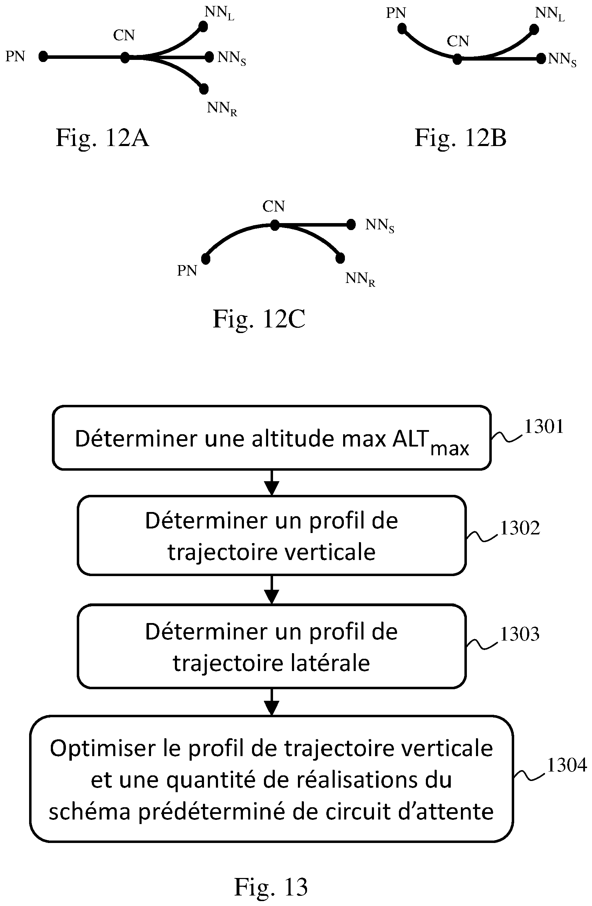

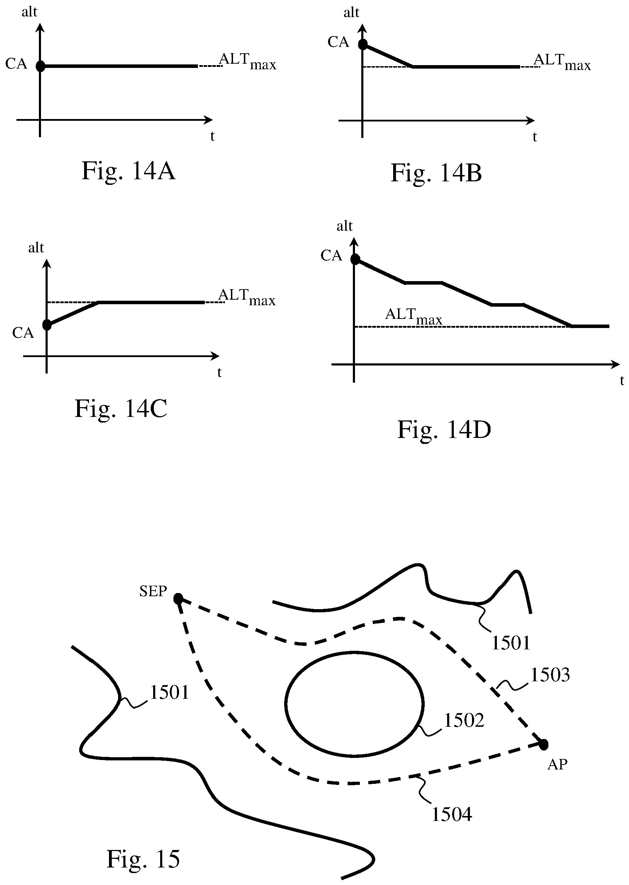

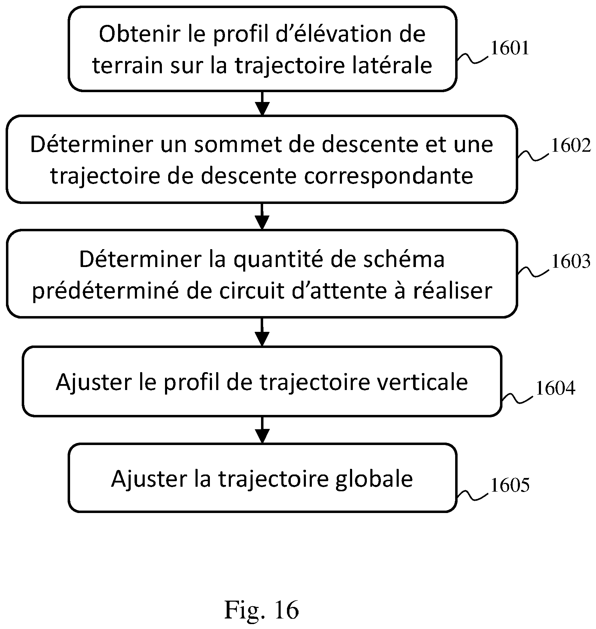

Comme détaillé ci-après en relation avec les Figs. 13 et 14A à 14D, un profil de trajectoire verticale est préférentiellement calculé par le système ATG 101 de sorte à permettre à l'aéronef 100 de rejoindre l'altitude maximale ALTₘₐₓ au besoin. En outre, suite à l'étape 403, le système ATG 101 optimise préférentiellement le profil de trajectoire verticale entre la position actuelle POS de l'aéronef 100 et le point d'entrée SEP de la procédure STARI, de sorte à minimiser la quantité d'itérations du schéma de circuit d'attente nécessaires. Cet aspect est détaillé ci-après en relation avec la Fig. 16.

En commençant par définir la procédure STARI applicable pour déterminer la trajectoire volable à suivre depuis la position actuelle de l'aéronef 100, il reste alors au système ATG 101 de calculer une trajectoire latérale à altitude maximale ALTₘₐₓ pour rejoindre le point d'entrée, ou un point au-dessus, de la procédure STARI. Cette découpe de détermination de trajectoire réduit considérablement la complexité de calcul de trajectoire et donc le temps de calcul nécessaire pour déterminer une trajectoire sûre, volable. Sous un autre angle, à temps de calcul identique, l'approche proposée permet de réduire la quantité de ressources de traitement nécessaires pour déterminer une trajectoire sûre pour rejoindre la piste d'atterrissage ciblée.

Un autre avantage est la prédictibilité de la manière dont l'aéronef 100 peut réaliser une dissipation d'énergie au besoin, grâce à la mise en place du schéma de circuit d'attente qui résulte de la procédure STARI. Encore un autre avantage est la prédictibilité de l'itinéraire d'approche finale de l'aéronef. Cette prédictibilité est un avantage indéniable pour le contrôle de la circulation aérienne ATC et pour d'éventuels autres aéronefs dans l'espace aérien à proximité.

La Fig. 5 illustre schématiquement un algorithme d'obtention de procédure STARI implémenté par le système ATG 101. L'algorithme de la Fig. 5 est implémenté lorsque la base de données STARI DB 205 est à disposition du système ATG 101.

Dans une étape 501, le système ATG 101 obtient l'information de piste d'atterrissage sélectionnée RW_SEL.

Dans une étape 502, le système ATG 101 vérifie auprès de la base de données STARI DB 205 si une procédure STARI a été préalablement définie pour la piste d'atterrissage sélectionnée RW_SEL et a été stockée dans la base de données STARI DB 205. Si tel est le cas, une étape 503 est effectuée ; sinon, une étape 504 est effectuée.

Dans l'étape 503, le système ATG 101 effectue une lecture de la procédure STARI depuis la base de données STARI DB 205. Le système ATG 101 obtient ainsi le point d'entrée SEP de la procédure STARI en question, afin de connaître la localisation géographique et l'altitude minimale auxquelles la trajectoire latérale à calculer doit se terminer. Le système ATG 101 obtient aussi le schéma de circuit d'attente applicable, ainsi qu'une trajectoire d'approche finale à appliquer depuis le point d'entrée SEP de la procédure STARI pour atterrir sur la piste d'atterrissage en question.

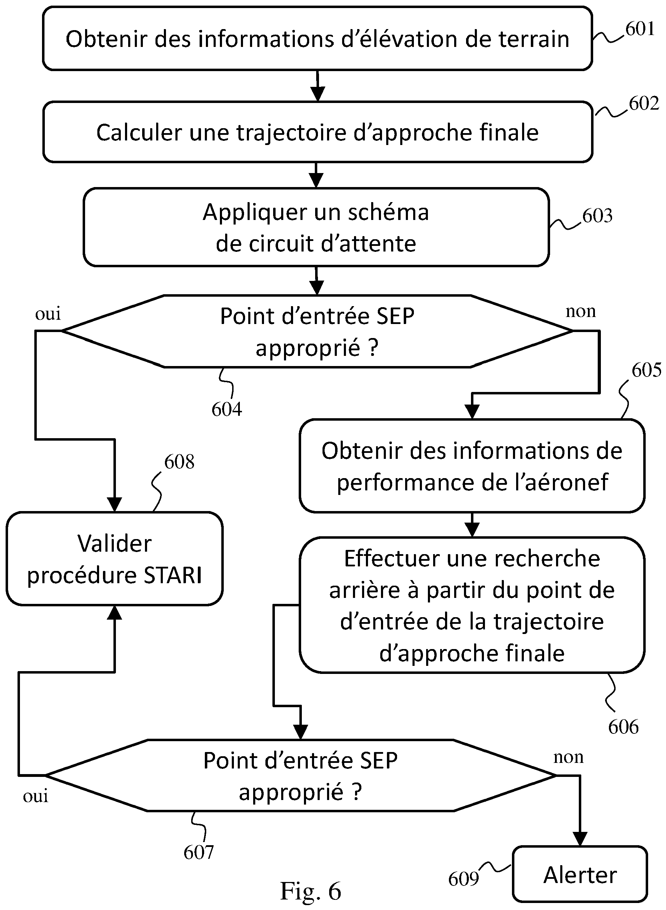

Dans l'étape 504, étant donné qu'aucune procédure STARI n'existe pour la piste d'atterrissage sélectionnée, le système ATG 101 génère une procédure STARI applicable pour cette piste d'atterrissage. Cet aspect est détaillé ci-après en relation avec la Fig. 6.

Dans une étape 505 optionnelle, le système ATG 101 sauvegarde la procédure STARI générée à l'étape 504 dans la base de données STARI DB 205, afin qu'elle puisse être ultérieurement réutilisée par l'aéronef 100, ou un autre aéronef, pour atterrir sur la piste en question.

La Fig. 6 illustre schématiquement un algorithme de génération de procédure STARI implémenté par le système ATG 101. L'algorithme de la Fig. 6 est implémenté lorsque la base de données STARI DB 205 n'est pas à disposition du système ATG 101, ou lorsque la base de données STARI DB 205 ne contient pas encore de procédure STARI pour la piste d'atterrissage sélectionnée RW-SEL.

La génération d'une procédure STARI est divisée en deux parties :
1. Construction d'une trajectoire d'approche finale ;
2. Recherche d'un point d'entrée SEP de la procédure STARI qui soit approprié.

Un point d'entrée SEP de la procédure STARI qui est approprié est tel que :
- Une trajectoire volable jusqu'à un point d'entrée de la trajectoire d'approche finale construite existe ;
- Un schéma de circuit d'attente sûr avec une forme prédéfinie à partir dudit point d'entrée SEP existe pour la dissipation d'énergie.

Ainsi, dans une étape 601, le système ATG 101 obtient, depuis la base de données DTDB 201, des informations d'élévation de terrain entourant la piste d'atterrissage sélectionnée RW_SEL. Typiquement, le système ATG 101 obtient les informations d'élévation de terrain dans un périmètre prédéterminé autour de la piste d'atterrissage sélectionnée RW_SEL ou de l'aéroport contenant ladite piste d'atterrissage.

Dans une étape 602, le système ATG 101 calcule une trajectoire d'approche finale. Le système ATG 101 calcule un point de début d'approche finale FAF (« Final Approach Fix » en anglais), représenté par le point A sur la Fig. 7.

Sur la Fig. 7, le début de la piste d'atterrissage est matérialisé par le point RW_S et la fin de la piste d'atterrissage est matérialisée par le point RW_E. La piste d'atterrissage a une longueur RW_L.

Afin d'être compatible avec tout système d'atterrissage utilisé, le système ATG 101 reçoit en entrée l'angle α de pente nominale d'approche (« glide slope » en anglais), et la hauteur h1 d'interception de la pente nominale d'approche. Le point de début d'approche finale FAF est ainsi aisément calculé par trigonométrie, et se trouve à une distance d1 du début de la piste d'atterrissage RW_S.

Le système ATG 101 reçoit aussi en entrée une distance d2 qui représente une distance avant le point de début d'approche finale FAF à laquelle l'aéronef 100 doit être aligné avec la piste. Le respect de cette distance d2 peut être important dans le cas de systèmes d'assistance à l'atterrissage utilisant de la reconnaissance d'image, de sorte à permettre une interception correcte avec la pente nominale d'approche. L'alignement avec la piste d'atterrissage est alors obtenu à un point B, comme représenté sur la Fig. 7. Sous le segment de droite reliant le point B au point A, une marge verticale VM (« Vertical Margin » en anglais) doit être dégagée de tout relief de terrain. Cette marge verticale se réduit progressivement du point A jusqu'au début de la piste d'atterrissage RW_S, comme illustré sur la Fig. 7.

Le point B est alors le point d'entrée de la trajectoire d'approche finale.

L'angle α, la hauteur h1 et la distance d2 sont incluses dans l'information de piste d'atterrissage sélectionnée RW_SEL.

Une marge latérale LM (« Latéral Margin » en anglais) doit aussi être respectée latéralement, comme illustré sur la Fig. 8. Cette marge latérale se réduit aussi progressivement du point A jusqu'au début de la piste d'atterrissage RW_S, comme illustré sur la Fig. 8.

La marge verticale VM et la marge latérale LM sont des valeurs prédéfinies qui permettent d'assurer une sûreté de navigation aux instruments, c'est-à-dire d'assurer une trajectoire sûre, volable.

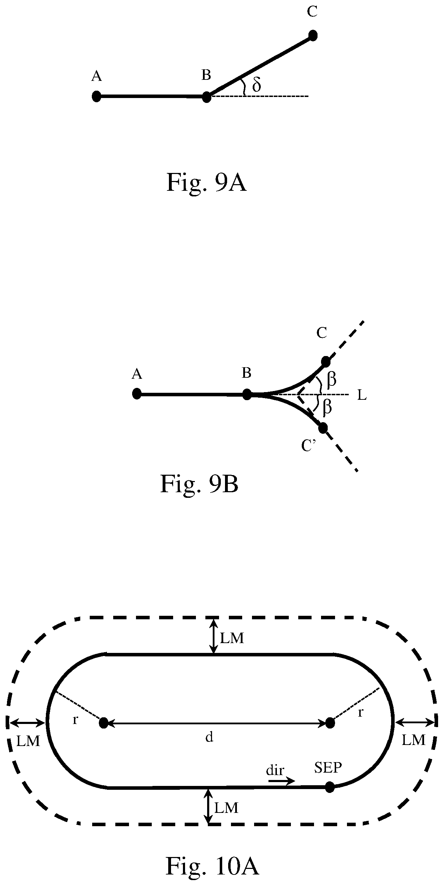

Il est en outre possible de forcer un angle de pente d'approche δ avant le point B au besoin, comme illustré sur la Fig. 9A. Il est aussi possible de forcer un angle latéral d'approche β à droite ou à gauche par rapport à l'axe de la piste d'atterrissage L, comme illustré sur la Fig. 9B.

Auquel cas, le point C est le point d'entrée de la trajectoire d'approche finale.

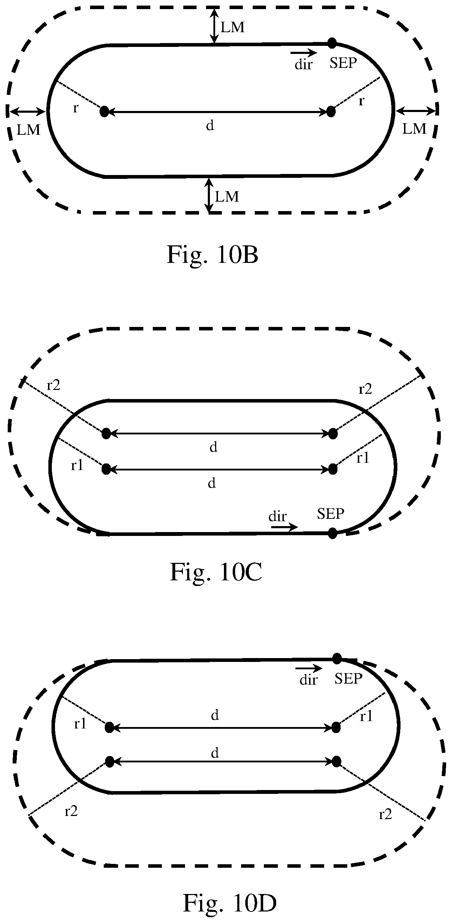

Une fois l'approche finale ainsi construite, une recherche de point d'entrée SEP de la procédure STARI peut être entreprise. Ainsi, dans une étape 603, le système ATG 101 applique un schéma de circuit d'attente. Le schéma de circuit d'attente a une forme oblongue prédéterminée caractérisée par un rayon r (le rayon des deux demi-cercles aux extrémités) et une distance d (distance séparant les deux demi-cercles), comme illustré sur les Figs. 10A et 10B. La Fig. 10A montre une réalisation du schéma de circuit d'attente avec centrage à gauche et la Fig. 10B montre une réalisation du schéma de circuit d'attente avec centrage à droite (la direction de parcours par l'aéronef est indiquée par la flèche notée « dir » sur les Figs. 10A et 10B. La position du point d'entrée SEP de la procédure STARI est prédéfinie sur le schéma de circuit d'attente. Ici aussi la marge latérale LM et la marge verticale VM doivent être dégagées de tout relief de terrain. Le schéma de circuit d'attente peut être effectué à altitude constante par l'aéronef 100, ou en descente.

Le rayon r et la distance d sont prédéterminés. Préférentiellement, le rayon r et éventuellement la distance d sont fixés en fonction des performances de l'aéronef 100 telles que définies dans la base de données PDB 203.

Dans un mode de réalisation particulier, le rayon r varie selon l'altitude de l'aéronef 100. Par exemple, le rayon r varie par paliers de tranches d'altitude. Plus l'altitude augmente, plus le rayon r est grand. Plus l'aéronef 100 arrive haut au-dessus du point d'entrée SEP de la procédure STARI, plus l'aéronef 100 arrive vite, et donc plus le rayon de virage qu'il est capable de faire est grand. Le schéma de circuit d'attente conserve sa forme mais ses proportions changent en fonction de l'altitude, comme illustré sur la Fig. 10C, où le schéma d'attente à deux altitudes distinctes est représenté avec centrage à gauche, et sur la Fig. 10D, où le schéma d'attente à deux altitudes distinctes est représenté avec centrage à droite. A noter que la marge LM n'est pas représentée sur les Figs 10C et 10D, uniquement par souci de lisibilité. Ainsi, le schéma de circuit d'attente est caractérisé par un rayon r = r1 à une altitude A1 et le schéma de circuit d'attente est caractérisé par un rayon r = r2 > r1 à une altitude A2 > A1. Les schémas de circuit d'attente conservent la même distance d.

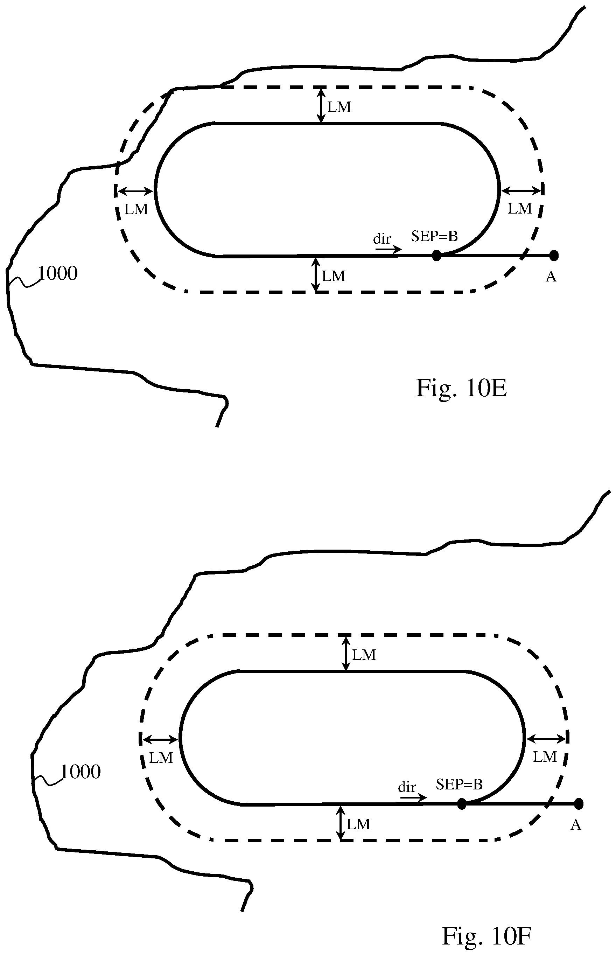

Dans le cadre de l'étape 603, le système ATG 101 utilise le schéma de circuit d'attente à plat, c'est-à-dire à altitude constante. Le système ATG 101 évalue si la réalisation du schéma de circuit d'attente est sûre, en fonction des informations d'élévation de terrain obtenues à l'étape 601, en plaçant le point d'entrée SEP de la procédure STARI sur le point d'entrée de la trajectoire d'approche finale tel qu'obtenu à l'issue de l'étape 602. Le système ATG 101 aligne le schéma de circuit d'attente avec la trajectoire d'approche finale calculée à l'étape 602 (comme illustré sur les Figs. 10E et 10F) et vérifie si le schéma de circuit d'attente peut être réalisé sans risque de collision avec le relief du terrain 1000 à l'altitude considérée. La Fig. 10E montre, en vue de dessus, une réalisation du schéma de circuit d'attente avec centrage à gauche qui n'est pas volable au vu du relief du terrain 1000 à l'altitude considérée. La Fig. 10F montre, en vue de dessus dans une autre configuration de terrain, une réalisation du schéma de circuit d'attente avec centrage à gauche qui est volable au vu du relief du terrain 1000 à l'altitude considérée. Si la réalisation du schéma de circuit d'attente avec centrage à gauche ou à droite n'est pas volable, alors le système ATG 101 teste la réalisation du schéma de circuit d'attente avec centrage de l'autre côté.

Dans une étape 604, le système ATG 101 vérifie si l'application du schéma de circuit d'attente à l'étape 603 mène à un point d'entrée SEP de la procédure STARI approprié. Si tel est le cas, la génération de la procédure STARI est terminée et une étape 608 est effectuée ; sinon, une étape 605 est effectuée. Dans l'étape 608, le système ATG 101 valide la procédure STARI dont le point d'entrée SEP est confondu avec le point d'entrée de la trajectoire d'approche finale tel qu'obtenu à l'issue de l'étape 602. Ce point d'entrée SEP et tout point au-dessus de ce point d'entrée SEP sont alors des points de terminaison valides pour le calcul de trajectoire latérale. La procédure STARI ainsi validée inclut aussi le schéma de circuit d'attente dont la réalisation a été validée à l'étape 603, de sorte à permettre la dissipation d'énergie à l'approche de la piste d'atterrissage.

Dans l'étape 605, le système ATG 101 obtient, depuis la base de données PDB 203, des informations de performance de l'aéronef 100.

Pour s'assurer qu'une trajectoire volable entre point d'entrée SEP de la procédure STARI et le point d'entrée de la trajectoire d'approche finale existe, le système ATG 101 effectue, dans une étape 606, une recherche arrière (« backward search » en anglais) à partir du point d'entrée de la trajectoire d'approche finale tel qu'obtenu à l'issue de l'étape 602. Le système ATG 101 explore plusieurs chemins jusqu'à trouver un point d'entrée SEP pour lequel la réalisation du schéma de circuit d'attente est volable.

Pour que la trajectoire soit facilement suivie par l'aéronef 100, les chemins explorés sont composés d'une séquence de virages (arcs de cercle) et/ou de segments de ligne uniquement. L'exploration des chemins possibles est réalisée en considérant une pente de descente, un rayon de virage et des performances de vitesse de l'aéronef 100 en concordance avec les informations de performance obtenues à l'étape 605. La recherche arrière est effectuée par tronçons de trajectoire dont la longueur est prédéfinie. Préférentiellement, les virages à gauche et à droite ne peuvent pas être enchaînés les uns avec les autres sans qu'un segment de ligne droite existe entre eux, comme illustré sur les Figs. 12A à 12C.

La recherche arrière s'effectue en appliquant une pente de descente, ce qui rend l'environnement dans lequel le schéma de circuit d'attente est testé moins contraignant vis-à-vis du relief de terrain.

La recherche arrière explore ainsi, par tronçons de trajectoire de longueur prédéfinie, des chemins composés d'une séquence de virages et/ou de segments de ligne, en considérant une pente de descente, un rayon de virage et une vitesse de l'aéronef en concordance avec les performances de l'aéronef 100 telles que fournies par la base de données PDB 203. A chaque nouveau tronçon ajouté, le système ATG 101 évalue si la réalisation du schéma de circuit d'attente est sûre, en fonction des informations d'élévation de terrain, en plaçant le point d'entrée SEP de la procédure STARI sur l'extrémité du chemin exploré. Le système ATG 101 considère le point d'entrée SEP de la procédure STARI comme approprié lorsque la réalisation du schéma de circuit d'attente est sûre au regard des informations d'élévation de terrain. Dans le cas contraire, le système ATG 101 étend les chemins explorés avec de nouveaux tronçons et réévalue la réalisation du schéma de circuit d'attente.

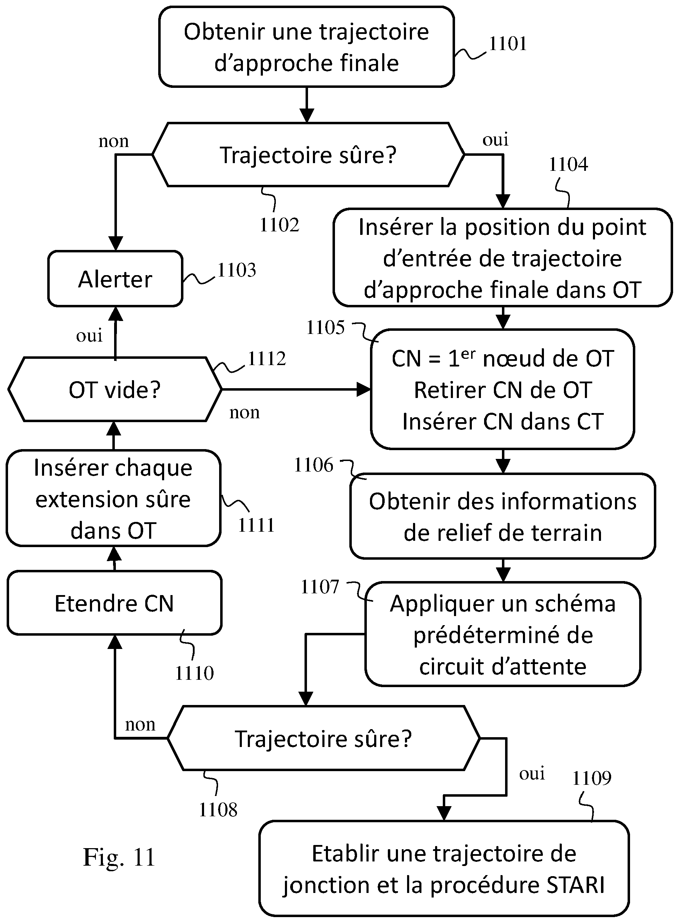

Un mode de réalisation particulier de la recherche arrière est détaillé ci-après en relation avec la Fig. 11.

Dans une étape 607, le système ATG 101 vérifie si la recherche arrière a permis de trouver un point d'entrée SEP de la procédure STARI approprié. Si tel est le cas, la génération de la procédure STARI est terminée et l'étape 608 est effectuée, dans laquelle le système ATG 101 valide la procédure STARI avec le point d'entrée SEP ainsi trouvé ; sinon, une étape 609 est effectuée.

Dans l'étape 609, le système ATG 101 alerte qu'aucune procédure STARI n'a pu être définie au vu des performances de l'aéronef 100. Dès lors, le système ATG 101 ne peut pas trouver de trajectoire volable pour permettre de faire atterrir l'aéronef 100 sur la piste d'atterrissage sélectionnée. Une autre piste d'atterrissage doit alors être sélectionnée. Cela peut être utilisé par un système de calcul de trajectoire, par exemple de type système de gestion de vol FMS de l'aéronef 100. Considérant en effet qu'un tel système de calcul de trajectoire a accès à une base de données comprenant une liste ordonnée d'aéroports et de pistes d'atterrissage possibles, pour par exemple poser l'aéronef 100 en urgence suite à une dépressurisation cabine, le système de calcul de trajectoire soumet au système ATG 101 les pistes d'atterrissages selon la liste ordonnée. Si le système ATG 101 est capable de trouver une trajectoire volable jusqu'à la piste d'atterrissage soumise par le système de calcul de trajectoire, alors ladite trajectoire est programmée dans système de calcul de trajectoire et est suivie pour faire atterrir l'aéronef 100. Sinon, le système de gestion de vol FMS soumet au système ATG 101 la prochaine piste d'atterrissage dans la liste ordonnée.

La Fig. 11 illustre schématiquement un algorithme de génération de procédure STARI implémenté par le système ATG 101, dans un mode de réalisation particulier de recherche arrière.

Dans une étape 1101, le système ATG 101 calcule une trajectoire d'approche finale. L'étape 1101 est identique à l'étape 602 décrite ci-dessus.

Dans une étape 1102, le système ATG 101 vérifie si la trajectoire d'approche finale calculée à l'étape 1101 est une trajectoire volable. Si tel est le cas, une étape 1104 est effectuée ; sinon, une étape 1103 est effectuée, dans laquelle le système ATG 101 alerte qu'aucune procédure STARI n'a pu être définie. L'étape 1103 est identique à l'étape 609 décrite ci-dessus.

Dans l'étape 1104, le système ATG 101 insère la position du point d'entrée de la trajectoire d'approche finale dans une liste OT (« Open Table » en anglais). La liste OT est une liste qui contient des points de trajectoire candidats actifs, c'est-à-dire ceux qui sont susceptibles d'être choisis dans de prochaines itérations de la recherche arrière pour être plus explorés.

Dans une étape 1105, le système ATG 101 place dans une variable CN (« Current Node » en anglais) le candidat le plus prometteur de la liste OT, qui est plus exploré pendant l'itération courante de la recherche arrière. Au départ, il n'y a que le point d'entrée de la trajectoire d'approche finale qui est candidat. Le système ATG 101 retire de la liste OT ce candidat pour ne pas être choisi à nouveau dans une itération suivante de la recherche arrière. De plus, le système ATG 101 insère la position pointée par la variable CN dans une liste CT (« Closed Table » en anglais). La liste CT contient les chemins qui ont été explorés précédemment, et permet de reconstruire la trajectoire du point d'entrée SEP de la procédure STARI jusqu'au point d'entrée de la trajectoire d'approche finale, dès lors qu'un tel point d'entrée SEP approprié a été trouvé.

Dans une étape 1106, le système ATG 101 obtient, depuis la base de données DTDB 201, des informations de relief de terrain à l'altitude considérée pour la position contenue dans la variable CN.

Dans une étape 1107, le système ATG 101 applique le schéma de circuit d'attente, comme dans l'étape 603 précédemment décrite.

Dans une étape 1108, le système ATG 101 vérifie si l'application du schéma de circuit d'attente à l'étape 1107 mène à un point d'entrée SEP de la procédure STARI approprié. Si tel est le cas, la recherche arrière est terminée et une étape 1109 est effectuée ; sinon, une étape 1110 est effectuée.

Dans l'étape 1109, le système ATG 101 valide la procédure STARI dont le point d'entrée SEP est le point contenu dans la variable CN. Le système ATG 101 reconstruit, grâce à la liste CT, la trajectoire qui a permis d'obtenir ce point par recherche arrière depuis le point d'entrée de la trajectoire d'approche finale tel qu'obtenu à l'issue de l'étape 1101, ce qui donne une trajectoire de jonction entre ce point d'entrée SEP et le point d'entrée de la trajectoire d'approche finale. Le système ATG 101 ajoute cette trajectoire de jonction à la trajectoire d'approche finale, ce qui revient à étendre la trajectoire d'approche finale.

Dans l'étape 1110, le système ATG 101 étend la trajectoire explorée par recherche arrière, en appliquant une pente de montée (du fait de la recherche arrière) prédéterminée en fonction des performances de l'aéronef 100 telles que fournies par la base de données PDB 203.

Les extensions théoriquement possibles sont schématisées, en vue de dessus, sur les Figs. 12A à 12C. Sur la Fig. 12A, lorsque la position précédente PN (« Previous Node » en anglais) sur la trajectoire en recherche arrière est reliée par un segment de droite à la position courante CN en cours d'exploration, la trajectoire peut être étendue grâce à un virage à droite et mener à un point NN_{R} (« Next Node / Right » en anglais), ou grâce à un segment de droite pour mener à un point NNs (« Next Node / Straight » en anglais), ou grâce à un virage à gauche et mener à un point NN_{L} (« Next Node / Left » en anglais). Sur la Fig. 12B, lorsque la position précédente PN sur la trajectoire en recherche arrière est reliée par un virage à gauche à la position courante CN en cours d'exploration, la trajectoire peut être étendue grâce à un virage à gauche et mener au point NN_{L}, ou grâce à un segment de droite pour mener au point NNs. Ainsi, la recherche arrière interdit préférentiellement une extension de trajectoire par virage à droite pour éviter une succession de virages à droite et à gauche sans segment de droite entre eux. Sur la Fig. 12C, lorsque la position précédente PN sur la trajectoire en recherche arrière est reliée par un virage à droite à la position courante CN en cours d'exploration, la trajectoire peut être étendue grâce à un virage à droite et mener au point NN_{R}, ou grâce à un segment de droite pour mener au point NNs. Ainsi, la recherche arrière interdit préférentiellement une extension de trajectoire par virage à gauche pour éviter une succession de virages à droite et à gauche sans segment de droite entre eux.

Dans l'étape 1110, le système ATG 101 ne conserve toute extension possible uniquement si elle permet de conserver la marge verticale VM et la marge latérale LM susmentionnées, c'est-à-dire toute extension volable, au regard des informations d'élévation de terrain obtenues à l'étape 1106. Ainsi, dans une étape 1111, le système ATG 101 insère chaque extension volable dans la liste OT pour plus ample exploration.

Dans une étape 1112, le système ATG 101 vérifie si la liste OT est vide. Si tel est le cas, l'étape 1103 est effectuée ; sinon, l'étape 1105 est réitérée afin de poursuivre l'exploration par la recherche arrière.

Une fois la procédure STARI établie, le système ATG 101 s'attèle à déterminer une trajectoire latérale volable qui permet de rejoindre le point d'entrée SEP de la procédure STARI ou un point au-dessus. Dans un mode de réalisation particulier, le système ATG 101 détermine au préalable un profil de trajectoire verticale permettant à l'aéronef 100 d'atteindre l'altitude maximale ALTₘₐₓ au regard de l'information de santé notée HLTH, tel que schématiquement illustré sur l'algorithme de la Fig. 13.

Dans une étape 1301, le système ATG 101 détermine l'altitude maximale ALTₘₐₓ au regard de l'information de santé HLTH et des performances de l'aéronef 100. En effet, plus l'aéronef 100 vole haut, moins le relief du terrain est contraignant pour trouver une trajectoire latérale volable depuis la position POS, et selon la vitesse VEL, de l'aéronef 100 jusqu'au point d'entrée SEP de la procédure STARI (ou un point au-dessus).

Ainsi, dans une étape 1302, le système ATG 101 détermine à partir de la position POS et de l'altitude ALT de l'aéronef 100, un profil de trajectoire verticale la plus élevée possible en fonction de l'information de santé HLTH et des performances de l'aéronef 100, c'est-à-dire pour amener l'aéronef 100 à l'altitude maximale ALTₘₐₓ.

Si l'altitude actuelle CA (« Current Altitude » en anglais) de l'aéronef 100 est égale à l'altitude maximale ALTₘₐₓ, aucun changement d'altitude n'est opéré, comme illustré schématiquement sur la Fig. 14A, où un profil de trajectoire verticale plat est montré au fil du temps t. Si l'altitude actuelle CA de l'aéronef 100 est supérieure à l'altitude maximale ALTₘₐₓ, le profil de trajectoire verticale descend pour amener l'aéronef à voler à l'altitude maximale ALTₘₐₓ autorisée, comme illustré schématiquement sur la Fig. 14B. Si l'altitude actuelle CA de l'aéronef 100 est inférieure à l'altitude maximale ALTₘₐₓ, le profil de trajectoire verticale monte pour amener l'aéronef à voler à l'altitude maximale ALTₘₐₓ et faire face à un environnement (relief de terrain) moins contraignant, comme illustré schématiquement sur la Fig. 14C.

Dans le cas où l'altitude maximale ALTₘₐₓ est inférieure à l'altitude actuelle CA de l'aéronef 100 en raison d'une dépressurisation cabine, le profil de trajectoire verticale est calculé en fonction de procédures de dépressurisation de cabine et respecter une descente par paliers, comme illustré schématiquement sur la Fig. 14D.

Puis, dans une étape 1303, le système ATG 101 détermine une trajectoire latérale volable qui suit le profil de trajectoire verticale déterminé à l'étape 1302. Le système ATG 101 cherche une trajectoire latérale qui :
- évite le relief du terrain, en tenant compte de la marge latérale LM et de la marge verticale VM, en fonction des informations d'élévation de terrain fournies par la base de données DTDB 201 selon l'altitude définie par le profil de trajectoire verticale, la vitesse VEL et les performances de l'aéronef 100 fournies par la base de données PDB 203 ;
- évite les zones militaires, en tenant compte de la marge latérale LM et de la marge verticale VM, en fonction des informations fournies par la base de données DMTDB 202 selon la vitesse VEL et les performances de l'aéronef 100 fournies par la base de données PDB 203 ; et
- évite les obstacles météorologiques selon l'altitude définie par le profil de trajectoire verticale, la vitesse VEL et les performances de l'aéronef 100 fournies par la base de données WTDB 204.

De nombreux algorithmes de recherche de chemin évitant des obstacles sont disponibles dans la littérature et cet aspect ne sera pas plus amplement détaillé ici. Des exemples de trajectoire latérale volable sont schématiquement illustrés, en pointillés, sur la Fig. 15. Deux trajectoires volables 1503 et 1504 sont représentées, depuis la position actuelle AP (« Aircraft Position » en anglais) de l'aéronef 100 vers le point d'entrée SEP de la procédure STARI. Les trajectoires 1503, 1504 évitent le relief 1501 présent à l'altitude de vol de l'aéronef 100 selon le profil de trajectoire verticale déterminé à l'étape 1302, en respectant la marge latérale LM et de la marge verticale VM. De plus, les trajectoires 1503, 1504 évitent une zone 1502 qui peut correspondre à une zone militaire dont le survol est interdit ou à un obstacle météorologique.

Dans le cas où le système ATG 101 trouve plusieurs trajectoires adaptées, le système ATG 101 sélectionne la trajectoire à retenir en appliquant un ou plusieurs critères prédéterminés de sélection (par exemple, la trajectoire la plus courte). Dans une variante, le système ATG 101 informe le système de gestion de vol FMS des différentes trajectoires trouvées et laisse le système de gestion de vol FMS, ou une autre entité de l'avionique, décider de la trajectoire à suivre.

Préférentiellement, dans une étape 1304, le système ATG 101 optimise le profil de trajectoire verticale, afin de réduire la quantité de réalisations du schéma prédéterminé de circuit d'attente applicable à la procédure STARI. En effet, la trajectoire latérale est déterminée selon le profil de trajectoire verticale déterminé à l'étape 1302. Selon ce profil de trajectoire verticale, l'aéronef 100 arrive sur le point d'entrée SEP de la procédure STARI à l'altitude ALTₘₐₓ, donc très probablement au-dessus dudit point d'entrée SEP. L'aéronef 100 peut réaliser une dissipation d'énergie et réduire son altitude grâce au schéma prédéterminé de circuit d'attente. Il est toutefois aussi possible de réduire l'altitude progressivement avant l'arrivée sur le point d'entrée SEP, en adaptant le profil de trajectoire verticale, et ainsi réduire la quantité de réalisations du schéma prédéterminé de circuit d'attente. Un mode de réalisation particulier est présenté par l'algorithme schématiquement illustré sur la Fig. 16.

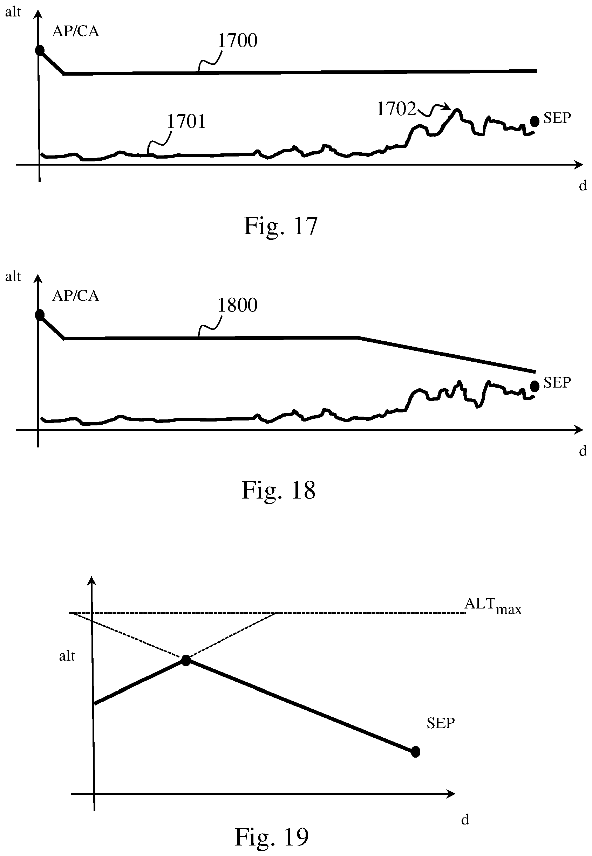

Dans une étape 1601, le système ATG 101 obtient, depuis la base de données DTDB 201, un profil d'élévation de terrain le long de la trajectoire latérale déterminée à l'étape 1303. Un tel profil d'élévation de terrain est schématiquement illustré sur la Fig. 17. Le profil de trajectoire verticale 1700 est schématiquement représenté depuis la position AP et l'altitude courante CA de l'aéronef 100 jusqu'à un point au-dessus du point d'entrée SEP de la procédure STARI. Le profil de terrain 1701 le long de la trajectoire latérale présente un point culminant 1702 à une altitude significativement inférieure à l'altitude maximale ALTₘₐₓ.

Dans une étape 1602, le système ATG 101 détermine un sommet de descente TOD (« Top Of Descent » en anglais) et une trajectoire de descente correspondante jusqu'au point d'entrée SEP de la procédure STARI. Le sommet de descente TOD est le point de transition de la phase de croisière de vol vers la phase de descente, et est communément calculé par les systèmes de gestion de vol FMS embarqués dans les aéronefs. Le sommet de descente TOD est ainsi déterminé en considérant qu'aucune réalisation du schéma de circuit d'attente n'est effectuée. Si le sommet de descente TOD ainsi déterminé entraîne une trajectoire de descente qui reste volable au vu du relief de terrain, l'optimisation est terminée. Sinon, le nombre de réalisations du schéma de circuit d'attente est incrémenté d'une unité jusqu'à ce que la trajectoire de descente obtenue soit volable (respect de la marge verticale VM). Un exemple de trajectoire de descente ainsi obtenue est schématiquement illustré sur la Fig. 18.

Alors, dans une étape 1603, le système ATG 101 détermine une quantité de réalisations du schéma de circuit d'attente nécessaires pour que le profil de trajectoire verticale 1800 ainsi modifié soit relié au point d'entrée SEP de la procédure STARI, et dans une étape 1604, le système ATG 101 ajuste en conséquence le profil de trajectoire verticale Dans le cas où le sommet de descente TOD apparaît avant le sommet de montée TOC (« Top Of Climb » en anglais) lorsque l'aéronef 100 monte pour chercher à atteindre l'altitude maximale ALTₘₐₓ, une optimisation particulière est réalisée comme illustré schématiquement sur la Fig. 19. Le sommet de montée TOC est le point de transition de la phase de montée vers la phase de croisière de vol. Le profil de trajectoire verticale est alors ajusté de sorte que l'aéronef 100 effectue une transition entre la phase de montée et la phase de descente à l'intersection des pentes de montée et de descente. Cette intersection est simplement déterminée par trigonométrie.

Dans une étape 1605, le système ATG 101 ajuste la trajectoire globale suite à l'optimisation ainsi réalisée.

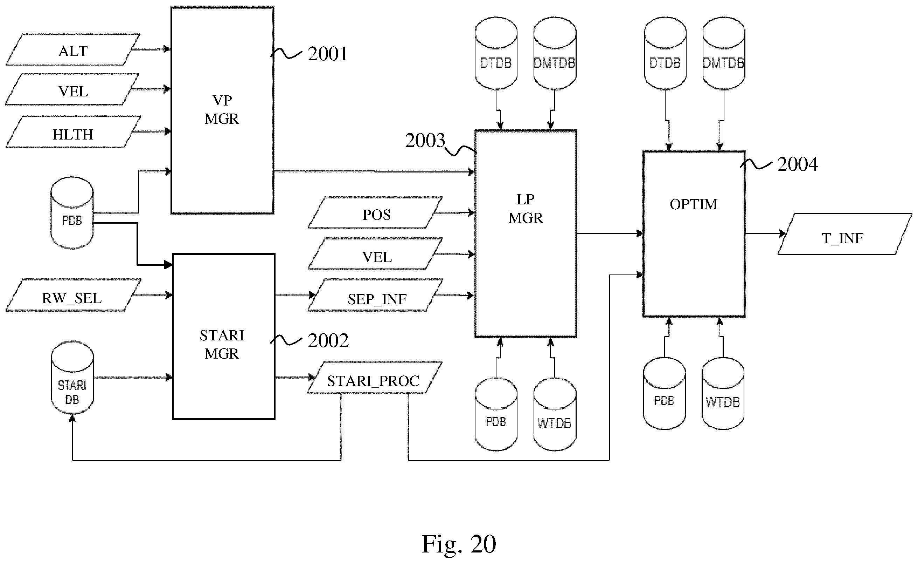

La Fig. 20 illustre schématiquement un mode de réalisation particulier du système ATG 101. Dans ce mode de réalisation particulier, le système ATG 101 comporte un gestionnaire de profil vertical 2001 (noté VP MGR, pour « Vertical Profile Manager » en anglais), un gestionnaire de procédure STARI 2002 (noté STARI MGR, pour « STARI Manager » en anglais), un gestionnaire de profil latéral 2003 (noté LP MGR, pour « Latéral Profile Manager » en anglais) et un optimiseur 2004. Le gestionnaire de procédure STARI 2002 comporte de la circuiterie électronique configurée pour implémenter le comportement décrit ci-dessus en relation avec les Figs. 5, 6, 7, 8, 10A, 10B, 10C, 10D, 10E et 10F, éventuellement avec les Figs. 9A et 9B, et préférentiellement avec la Fig. 11. Le gestionnaire de profil vertical 2001 comporte de la circuiterie électronique configurée pour implémenter le procédé décrit ci-dessus en relation avec les Figs. 14A, 14B, 14C et 14D. Le gestionnaire de profil latéral 2003 comporte de la circuiterie électronique configurée pour implémenter le comportement décrit ci-dessus en relation avec la Fig. 15. Et l'optimiseur 2004 comporte de la circuiterie électronique configurée pour implémenter le comportement décrit ci-dessus en relation avec les Figs. 16, 17, 18, et 19.

L'approche divulguée ci-dessus repose sur une décomposition de calcul de trajectoire en sous-problème de moindre complexité que de chercher à déterminer directement une trajectoire globale pour faire atterrir l'aéronef 100. Le temps de traitement pour parvenir à une trajectoire volable est significativement réduit.

Dans un mode de réalisation particulier, la circuiterie électronique de l'avionique de l'aéronef 100 est configurée pour sélectionner une piste d'atterrissage géoréférencée et ordonner au système ATG 101 de générer une trajectoire volable permettant de rejoindre la piste d'atterrissage géoréférencée sélectionnée. Dans le cas où le système ATG 101 est en incapacité de générer une telle trajectoire, une autre piste d'atterrissage géoréférencée est sélectionnée jusqu'à trouver une piste d'atterrissage pour laquelle le système ATG 101 réussit à générer une telle trajectoire.

## Revendications

1. Procédé de génération de trajectoire pour amener un aéronef (100) en vol depuis une position courante à une piste d'atterrissage, le procédé étant implémenté par un système sous forme de circuiterie électronique embarquée dans l'aéronef (100), le procédé comportant les étapes successives suivantes :
- sélectionner une piste d'atterrissage géoréférencée ;
- obtenir (402) une procédure, dite procédure STARI, qui est adaptée à ladite piste d'atterrissage géoréférencée sélectionnée et qui fournit une trajectoire finale à l'approche de ladite piste d'atterrissage qui soit volable par l'aéronef (100) pour atterrir, quelles que soient les performances de l'aéronef (100), et telle que, à partir du point d'entrée de la trajectoire finale ou de tout point au-dessus, un schéma de circuit d'attente de forme prédéfinie est volable pour réaliser une dissipation d'énergie si nécessaire ;
- calculer (403) une trajectoire latérale, évitant relief de terrain, obstacles météorologiques et zones militaires dont le survol est interdit, entre la position courante de l'aéronef (100) et ledit point d'entrée ou un point au-dessus, en fonction de performances adaptées à un état opérationnel de l'aéronef (100) ;
- fournir (404) une trajectoire globale pour amener l'aéronef (100) jusqu'à atterrir sur ladite piste d'atterrissage, en reliant la trajectoire latérale calculée et la trajectoire finale fournie par la procédure STARI en incluant au besoin une ou plusieurs itérations du schéma de circuit d'attente,
le procédé comportant, pour obtenir (402) la procédure STARI, les étapes suivantes :
- lorsqu'une procédure STARI a été préalablement définie pour ladite piste d'atterrissage et a été stockée dans une base de données, lire (503) la procédure STARI depuis la base de données ;
- lorsque la base de données ne stocke aucune procédure STARI pour ladite piste d'atterrissage, établir (504) la procédure STARI en temps-réel de la manière suivante :
- construire (602) une trajectoire d'approche finale ;
- rechercher un point d'entrée de la procédure STARI approprié respectant les conditions suivantes :
- une trajectoire volable jusqu'à un point d'entrée de la trajectoire d'approche finale construite existe ;
- le schéma de circuit d'attente est volable par l'aéronef jusqu'au point d'entrée de la procédure STARI de manière sûre pour la dissipation d'énergie, **caractérisé en ce que** le procédé comporte, pour rechercher le point d'entrée de la procédure STARI approprié, les étapes suivantes :
- évaluer (604) si la réalisation du schéma de circuit d'attente est sûre, en fonction d'informations d'élévation de terrain entourant la piste d'atterrissage, en plaçant le point d'entrée de la procédure STARI sur le point d'entrée de la trajectoire d'approche finale et en alignant (603) le schéma de circuit d'attente avec la trajectoire d'approche finale ;
- considérer le point d'entrée de la procédure STARI comme approprié lorsque la réalisation du schéma de circuit d'attente est sûre au regard des informations d'élévation de terrain entourant la piste d'atterrissage ; sinon
- effectuer (606) une recherche arrière de point d'entrée de la procédure STARI, à partir du point d'entrée de la trajectoire d'approche finale en appliquant une pente de descente, lorsque la réalisation du schéma de circuit d'attente n'est pas sûre au regard des informations d'élévation de terrain entourant la piste d'atterrissage.
la recherche arrière comportant les étapes suivantes :
- explorer, par tronçons de trajectoire de longueur prédéfinie, des chemins composés d'une séquence de virages et/ou de segments de ligne, en considérant une pente de descente, un rayon de virage et une vitesse de l'aéronef en concordance avec l'état opérationnel de l'aéronef ;
- évaluer (1108) si la réalisation du schéma de circuit d'attente est sûre, en fonction des informations d'élévation de terrain entourant la piste d'atterrissage, en plaçant le point d'entrée de la procédure STARI sur l'extrémité du chemin exploré ;
- considérer le point d'entrée de la procédure STARI comme approprié lorsque la réalisation du schéma de circuit d'attente est sûre au regard des informations d'élévation de terrain entourant la piste d'atterrissage, et établir (1109) une trajectoire de jonction entre ledit point d'entrée de la procédure STARI approprié et l'entrée de la trajectoire finale d'approche ; et
- étendre (1110) les chemins explorés avec de nouveaux tronçons et réévaluer la réalisation du schéma de circuit d'attente lorsque la réalisation du schéma de circuit d'attente n'est pas sûre au regard des informations d'élévation de terrain entourant la piste d'atterrissage,
et dans le cas où la génération d'une trajectoire volable permettant de rejoindre la piste d'atterrissage géoréférencée sélectionnée est impossible, sélectionner une autre piste d'atterrissage géoréférencée jusqu'à trouver une piste d'atterrissage géoréférencée pour laquelle une trajectoire volable est possible.

2. Procédé selon la revendication 1 , dans lequel le schéma de circuit d'attente a une forme oblongue prédéterminée **caractérisée par** un rayon r qui est le rayon des deux demi-cercles aux extrémités, et une distance d qui est la distance séparant les deux demi-cercles, et dans lequel le rayon r est défini est fonction des performances adaptées à l'état opérationnel de l'aéronef (100) et qui augmente avec l'altitude.

3. Procédé selon l'une des revendications 1 et 2, comportant, avant de calculer (403) la trajectoire latérale, les étapes suivantes :
- déterminer (1301) une altitude de croisière maximale au regard des performances adaptées à l'état opérationnel de l'aéronef (100) ;
- déterminer (1302) un profil de trajectoire verticale amenant l'aéronef (100) à l'altitude de croisière maximale ;
et dans lequel la trajectoire latérale est calculée en suivant le profil de trajectoire verticale déterminé.

4. Procédé selon la revendication 3, dans lequel le profil de trajectoire verticale est optimisé (1304) afin de réduire une quantité de réalisations du schéma prédéterminé de circuit d'attente applicable à la procédure STARI, par les étapes suivantes :
- obtenir (1601) un profil d'élévation de terrain le long de la trajectoire latérale ;
- déterminer (1602) un sommet de descente et une trajectoire de descente correspondante jusqu'au point d'entrée de la procédure STARI ;
- incrémenter, au besoin, la quantité de réalisations du schéma de circuit d'attente d'une unité jusqu'à ce que la trajectoire de descente obtenue soit volable.

5. Procédé selon la revendication 4, dans lequel, dans le cas où le sommet de descente apparaît avant un sommet de montée lorsque l'aéronef monte pour chercher à atteindre l'altitude de croisière maximale, le profil de trajectoire verticale est ajusté de sorte que l'aéronef effectue une transition entre la phase de montée et la phase de descente à l'intersection des pentes de montée et de descente.

6. Produit programme d'ordinateur comportant des instructions pour implémenter le procédé selon l'une quelconque des revendications 1 à 5, lorsque lesdites instructions sont exécutées par un processeur (301).

7. Support de stockage d'informations stockant des instructions pour implémenter le procédé selon l'une quelconque des revendications 1 à 5, lorsque lesdites instructions sont lues depuis le support de stockage d'informations et exécutées par un processeur (301).

## Patentansprüche

1. Verfahren zur Erzeugung einer Flugbahn, um ein Luftfahrzeug (100) von einer aktuellen Position zu einer Landebahn zu bringen, wobei das Verfahren von einem System in Form einer elektronischen Schaltung an Bord des Luftfahrzeugs (100) implementiert wird und das Verfahren die folgenden aufeinanderfolgenden Schritte umfasst:
- Auswahl einer georeferenzierten Landebahn;
- Erhalt (402) eines Verfahrens, das sogenannte STARI-Verfahren, das an die ausgewählte georeferenzierte Landebahn angepasst ist und das eine endgültige Anflugbahn für die Landebahn liefert, die von dem Luftfahrzeug (100) zur Landung geflogen werden kann. Dies ist unabhängig von der Leistung des Flugzeugs (100), und erfolgt so, dass vom Eintrittspunkt der endgültigen Flugbahn oder jedem Punkt darüber ein Warteschleifenmuster mit vordefinierter Form fliegbar ist, um bei Bedarf eine Energiedissipation zu ermöglichen;
- Berechnung (403) einer seitlichen Flugbahn zwischen der aktuellen Position des Luftfahrzeugs (100) und dem Eintrittspunkt oder einem Punkt darüber, die Geländereliefs, meteorologische Hindernisse und militärische Sperrgebiete vermeidet. Dies erfolgt auf der Grundlage von Leistungen, die für einen Betriebszustand des Luftfahrzeugs (100) geeignet sind;
- Bereitstellung (404) einer globalen Flugbahn, um dem Luftfahrzeug (100) die Landung auf der Landebahn zu ermöglichen, indem die berechnete seitliche Flugbahn und die endgültige Flugbahn, die durch das STARI-Verfahren bereitgestellt wird, miteinander verbunden werden. Bei Bedarf werden eine oder mehrere Iterationen des Warteschleifenmusters eingeschlossen und das Verfahren zum Erhalt (402) des STARI-Verfahrens umfasst die folgenden Schritte:
- Das Lesen (503) des STARI-Verfahrens aus der Datenbank, wenn ein STARI-Verfahren zuvor für die Landebahn definiert wurde und in einer Datenbank gespeichert wurde;
- Das Erstellen (504) des STARI-Verfahrens in Echtzeit auf folgende Weise, wenn die Datenbank kein STARI-Verfahren für die Landebahn gespeichert hat:
- Erstellen (602) einer endgültigen Anflugbahn;
- Suche nach einem geeigneten Eintrittspunkt für das STARI-Verfahren, der die folgenden Bedingungen erfüllt:
- eine fliegbare Flugbahn bis zu einem Eintrittspunkt der erstellten endgültigen Anflugbahn ist vorhanden;
- das Warteschleifenmuster ist durch das Luftfahrzeug bis zum Eintrittspunkt des STARI-Verfahrens in einer für die Energiedissipation sicheren Weise fliegbar und ist **dadurch gekennzeichnet, dass** das Verfahren zum Suchen des geeigneten Eintrittspunktes des STARI-Verfahrens die folgenden Schritte umfasst:
- Beurteilung (604), ob die Ausführung des Warteschleifenmusters sicher ist, auf der Grundlage von Höheninformationen des die Landebahn umgebenden Geländes, indem der Eintrittspunkt des STARI-Verfahrens auf den Eintrittspunkt der endgültigen Anflugbahn gesetzt wird und das Warteschleifenmuster mit der endgültigen Anflugbahn ausgerichtet wird (603);
- den Eintrittspunkt des STARI-Verfahrens als angemessen betrachten, wenn die Umsetzung des Warteschleifenmusters in Bezug auf die Höheninformationen des die Landebahn umgebenden Geländes sicher ist;
- ansonsten eine Rückwärtssuche nach einem Eintrittspunkt des STARI-Verfahrens, ab dem Eintrittspunkt der endgültigen Anflugbahn unter Anwendung einer Abstiegsneigung durchführen (606), wenn die Durchführung des Wartekreismusters in Bezug auf die Höheninformationen des die Landebahn umgebenden Geländes unsicher ist. Die Rückwärtssuche umfasst dabei die folgenden Schritte:
- Erkundung von Pfaden, die aus einer Folge von Kurven und/oder Liniensegmenten bestehen, durch Bahnabschnitte vorgegebener Länge unter Berücksichtigung einer Abstiegsneigung, eines Kurvenradius und einer Geschwindigkeit des Luftfahrzeugs, die mit dem Betriebszustand des Luftfahrzeugs übereinstimmen;
- Bewertung (1108), ob die Durchführung des Warteschleifenmusters sicher ist, auf der Grundlage der Höheninformationen des die Landebahn umgebenden Geländes, indem der Eintrittspunkt des STARI-Verfahrens auf das Ende des erkundeten Pfades ansetzt wird;
- den Eintrittspunkt des STARI-Verfahrens als geeignet betrachten, wenn die Durchführung des Warteschleifenmusters in Bezug auf die Höheninformationen des die Landebahn umgebenden Geländes sicher ist, und ( 1109) einen Verbindungspfad zwischen dem geeigneten Eintrittspunkt des STARI-Verfahrens und dem Eintritt in die endgültige Anflugbahn festlegen;
- und Erweiterung (1110) der erkundeten Pfade mit neuen Abschnitten und Neubewertung der Durchführung des Warteschleifenmusters, wenn die Durchführung des Warteschleifenmusters in Bezug auf die Höheninformationen des die Landebahn umgebenden Geländes nicht sicher ist, und für den Fall, dass die Erzeugung einer flugfähigen Flugbahn, die es ermöglicht, die ausgewählte georeferenzierte Landebahn zu erreichen, nicht möglich ist, eine andere georeferenzierte Landebahn auswählen, bis eine georeferenzierte Landebahn gefunden wird, für die eine flugfähige Flugbahn möglich ist.

2. Verfahren nach Anspruch 1, bei dem das Warteschleifenmuster eine vorbestimmte längliche Form hat, **gekennzeichnet durch** einen Radius r, welcher der Radius der beiden Halbkreise an den Enden ist, und einen Abstand d, welcher der Abstand zwischen den beiden Halbkreisen ist, und bei dem der Radius r in Abhängigkeit von der an den Betriebszustand des Luftfahrzeugs (100) angepassten Leistung definiert ist und mit zunehmender Höhe zunimmt.

3. Verfahren nach einem der Ansprüche 1 oder 2, das vor dem Berechnen (403) der seitlichen Flugbahn die folgenden Schritte umfasst:
- Festlegung (1301) einer maximalen Reiseflughöhe im Hinblick auf die an den Betriebszustand des Luftfahrzeugs (100) angepasste Leistung;
- Festlegung (1302) eines vertikalen Flugbahnprofils, welches das Luftfahrzeug (100) auf die maximale Reiseflughöhe bringt;
und bei dem die seitliche Flugbahn berechnet wird, indem sie dem ermittelten vertikalen Flugbahnprofil folgt.

4. Verfahren nach Anspruch 3, bei dem das vertikale Flugbahnprofil optimiert wird (1304), um die Anzahl der Durchführungen des vorbestimmten, auf das STARI-Verfahren anwendbaren Warteschleifenmusters zu reduzieren, durch die folgenden Schritte:
- Erhalt (1601) eines Höhenprofils des Geländes entlang der seitlichen Flugbahn;
- Festlegung (1602) eines Abstiegshochpunktes und einer entsprechenden Abstiegsflugbahn bis zum Eintrittspunkt des STARI -Verfahrens;
- die Anzahl der Durchführungen des Warteschleifenmusters bei Bedarf um eine Einheit erhöhen, bis die erhaltene Abstiegsflugbahn fliegbar ist.

5. Verfahren nach Anspruch 4, bei dem das vertikale Flugbahnprofil so angepasst wird, dass das Flugzeug am Schnittpunkt der Anstiegs- und Abstiegsneigungen einen Übergang zwischen der Anstiegsflugphase und der Abstiegsflugphase vollzieht und wenn der Abstiegshochpunkt vor einem Anstiegshochpunkt auftritt während das Luftfahrzeug steigt, um die maximale Reiseflughöhe anzustreben.

6. Computerprogrammprodukt mit Anweisungen zum Implementieren des Verfahrens nach einem der Ansprüche 1 bis 5, wenn die Anweisungen von einem Prozessor (301) ausgeführt werden.

7. Informationsspeichermedium, das Anweisungen zum Implementieren des Verfahrens nach einem der Ansprüche 1 bis 5 speichert, wenn die Anweisungen von dem Informationsspeichermedium gelesen und von einem Prozessor (301) ausgeführt werden.

## Claims

1. Method for generating a trajectory for bringing an aircraft (100) in flight from a current position to a runway, the method being implemented by a system in the form of electronic circuitry on board the aircraft (100), the method comprising the following successive steps:
- selecting a georeferenced runway;
- obtaining (402) a procedure, called STARI procedure, which is suited to said georeferenced runway and which provides a final trajectory for the approach to said runway which is flyable by the aircraft (100) in order to land, regardless of the performance of the aircraft (100), and such that, from the entry point of the final trajectory or any point above it, a holding loop pattern of a predefined shape is flyable in order to dissipate energy if necessary;
- computing (403) a lateral trajectory, avoiding any terrain relief, meteorological obstacles and military no-fly zones, between the current position of the aircraft (100) and said entry point or a point above it, based on performance adapted to an operational state of the aircraft (100);
- providing (404) an overall trajectory in order to bring the aircraft (100) to landing on said runway, by linking the computed lateral trajectory and the final trajectory provided by the STARI procedure, including one or more iterations of the holding loop pattern if necessary; the method comprising, for obtaining (402) the STARI procedure, the following steps:
- when a STARI procedure has been defined beforehand for said runway and has been stored in a database, reading (503) the STARI procedure from the database;
- when the database does not store any STARI procedure for said runway, establishing (504) the STARI procedure in real time as follows:
- building (602) a final approach trajectory; and
- searching for an appropriate entry point of the STARI procedure that complies with the following conditions:
- a flyable trajectory to an entry point of the built final approach trajectory exists; and
- the holding loop pattern is flyable by the aircraft until said entry point of the STARI procedure in order to dissipate energy;
**characterized in that** the method comprises, for searching for the appropriate entry point of the STARI procedure, the following steps:
- evaluating (604) whether it is safe to implement the holding loop pattern, based on information about elevation of terrain surrounding the runway, by placing the entry point of the STARI procedure on the entry point of the final approach trajectory and by aligning (603) the holding loop pattern with the final approach trajectory;
- considering the entry point of the STARI procedure to be appropriate when it is safe to implement the holding loop pattern in light of the information about the elevation of the terrain surrounding the runway; otherwise
- performing (606) a backward search for an entry point of the STARI procedure, from the entry point of the final approach trajectory by applying a descent slope, when it is not safe to implement the holding loop pattern in light of the information about the elevation of the terrain surrounding the runway.
the backward search comprising:
- exploring, in trajectory sections of a predefined length, paths formed of a sequence of turns and/or straight segments, considering a descent slope, a turn radius and a speed of the aircraft in line with the operational state of the aircraft;
- evaluating (1108) whether it is safe to implement the holding loop pattern, based on the information about the elevation of the terrain surrounding the runway, by placing the entry point of the STARI procedure on the end of the explored path;
- considering the entry point of the STARI procedure to be appropriate when it is safe to implement the holding loop pattern in light of the information about the elevation of the terrain surrounding the runway, and establishing (1109) a joining trajectory between said appropriate entry point of the STARI procedure and the entry of the final approach trajectory; and
- extending (1110) the explored paths with new sections and re-evaluating the implementation of the holding loop pattern when it is not safe to implement the holding loop pattern in light of the information about the elevation of the terrain surrounding the runway, and in the case where the generation of a flyable trajectory enabling to join the selected georeferenced runway is impossible, selecting another georeferenced runway until finding a georeferenced runway for which a flyable trajectory is possible.

2. Method according to claim 1, wherein the holding loop pattern has a predetermined oblong shape **characterized by** a radius r, which is the radius of the two semicircles at the ends, and a distance d, which is the distance between the two semicircles, and wherein the radius r is defined based on performance adapted to the operational state of the aircraft (100) and which increases with altitude.

3. Method according to one of claims 1 and 2, comprising, before computing (403) the lateral trajectory, the following steps:
- determining (1301) a maximum cruising altitude with regard to the performance adapted to the operational state of the aircraft (100);
- determining (1302) a vertical trajectory profile that brings the aircraft (100) to the maximum cruising altitude;
and wherein the lateral trajectory is computed while following the determined vertical trajectory profile.

4. Method according to claim 3, wherein the vertical trajectory profile is optimized (1304) for reducing a quantity of implementations of the predetermined holding loop pattern applicable to the STARI procedure, through the following steps:
- obtaining (1601) a terrain elevation profile along the lateral trajectory;
- determining (1602) a top of descent and a corresponding descent trajectory to the entry point of the STARI procedure; and
- incrementing, if necessary, the quantity of implementations of the holding loop pattern by one unit until the obtained descent trajectory is flyable.

5. Method according to claim 4, wherein, if the top of descent occurs before a top of climb when the aircraft is climbing to attempt to reach the maximum cruising altitude, the vertical trajectory profile is adjusted so that the aircraft performs a transition between the climbing phase and the descent phase at the intersect of the climb and descent slopes.

6. Computer program product comprising instructions for implementing the method according to any one of claims 1 to 5, when said instructions are executed by a processor (301).

7. Information storage medium storing instructions for implementing the method according to any one of claims 1 to 5, when said instructions are read from the information storage medium and executed by a processor (301).
